Europäisches Patentamt

European Patent Office

Office européen des brevets

(19)

(11) Publication number: **0 115 363**
**B1**

(12) **EUROPEAN PATENT SPECIFICATION**

(45) Date of publication of patent specification: **22.04.87**

(51) Int. Cl.⁴: **A 01 K 43/00,** B 65 B 23/06

(21) Application number: **84200074.7**

(22) Date of filing: **20.01.84**

(54) A method and an apparatus for handling vulnerable articles, as well as a container adapted to apply this method.

(30) Priority: **26.01.83 NL 8300287**

(43) Date of publication of application:
**08.08.84 Bulletin 84/32**

(45) Publication of the grant of the patent:
**22.04.87 Bulletin 87/17**

(84) Designated Contracting States:
**DE FR GB IT NL**

(56) References cited:
**DE-A-1 456 703**
**FR-A-2 011 231**

(73) Proprietor: **Staalkat B.V.**
**Ambachtsstraat 4**
**NL-7122 MP Aalten (NL)**

(72) Inventor: **van der Schoot, Jelle**
**Spinkastraat 9**
**NL-7121 AL Aalten (NL)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Courier Press, Leamington Spa, England.

## Description

The invention relates to a method and an apparatus for transporting products along and between successive stations and handling the same therein, e.g. arranging, candling, weighing, encoding, grading and the like of vulnerable products, such as eggs, wherein each product at least during a part of the handling cycle, is separately received in a container and each product is removed therefrom after the said part of the cycle, as known from the French patent application FR—A—2,011,231.

Said French patent, however, does not concern a mutually independent movability of the cups, neither in one nor in more directions. As a matter of fact, the cups are attached to a chain conveyor. It is further stated that the containers can slide along the cross rods of the chain conveyor. Moreover, the containers are under the influence of longitudinal guides. This entirely fixes the position of the cups in the plane of motion.

It is an object of the invention to create a method and apparatus in which buffering i.e. accumulation and automatic arrangement of the containers in the right pattern are possible.

To this effect a method of the above described type is characterized in that each container is independently movable with respect to other containers in at least one direction.

Each container supplied, at the weighing station, is first weighed in empty condition and, after the reception of a product therein, together therewith, thus determining the weight and the weight class of the article.

The invention further relates to an apparatus for transporting products along and between successive stations and handling the same therein, e.g. arranging, candling, weighing, encoding, grading and the like of vulnerable products, such as eggs, comprising means for transferring each product separately to a container at least during a part of the handling cycle, at least one conveyor member for conveying the product placed in its container during this part of the handling cycle, and means for removing each product from its container after the said part of the handling cycle, while no means on the conveyor means prevent each container conveyed by the conveyor means from moving independently with respect to other containers or from moving independently with respect to other containers in at least one direction.

The invention further relates to a grading device comprising a feed belt, as well as a plurality of buffer belts arranged therealong, wherein the feed belt is fitted with gripping or carrying members for receiving the containers or eggs, while along the feed belt, at each of the buffer belts, there are arranged one or more expelling or releasing mechanisms for expelling or releasing the containers or eggs from the gripping or carrying members.

The invention also relates to a container for use in the apparatus as described, which container is open at the top, narrowing towards the bottom, e.g. according to one or more truncated cones, and further comprising a foot extending perpendicular to the container axis, the outer circumference of said foot being at least equal to the outer circumference of the upper edge of the container and in which said foot contains a magnetic or magnetizable ring.

In a further embodiment of the invention, a bottom plate is arranged directly above the lower run of the buffer plate for transporting the empty containers, which bottom plate is magnetic, just as the return roller of said buffer belt disposed at the discharge end, each of the containers being provided with a part made of sort iron or other magnetizable material. Another possibility is that directly above each lower run of the buffer belt, there is arranged a bottom plate which is made of soft iron, just as the return roller of the buffer belt disposed at the discharge end of said buffer belt, the containers being provided with a magnet, so that the containers are carried along "hanging" from the lower run of the buffer belt.

When the articles are contained in a container during the entire handling cycle, two conveyor belts extending underneath the buffer belts may be provided for returning the containers from the buffer belts, one of these extending in the same direction as the feed belt, at which location the said bottom plates terminate, so that the containers hanging from the buffer belts are transferred onto said conveyor belt. In addition to the said conveyor belt, a second conveyor belt may be arranged which extends in opposite direction, and adjacent the lastmentioned buffer belt there may be provided a transfer apparatus above the said first and second conveyor belt. Said transfer apparatus may consist of a bottom plate which is extended relative to the other bottom plates. The first and second conveyor belt described ensure that all containers are returned along a track having the same pathlength to the starting point, viz. the feed belt or the weighing apparatus.

In a further embodiment of the invention, there may be provided adjacent the end of the second conveyor belt an inserting station for pushing the empty containers in the feed belt. Said inserting station may consist of a plurality of baffles arranged longitudinally above the conveyor belt and of a plurality of baffles arranged downstream thereof, transversely to the transport direction above the conveyor belt, each having a different length, while furthermore a plurality of inserting members are arranged at the end of said conveyor belt opposite the feed belt, adjacent the baffles disposed transversely to the transport direction. Through this arrangement, it is achieved that a great many containers can be quickly introduced simultaneously in the feed belt.

For transferring eggs from an orienting roller conveyor to the containers, there may be provided at the transfer location a chute and a mill and wing arranged thereabove.

Furthermore, when a plurality of guide plates are arranged above the discharge end of each buffer belt, each guide plate may be mounted on a hinged bracket, and be provided at a downstream end with a blocking member for containers, and be tiltable by means of a magnet or the like, so that the containers can pass. Finally, the invention also relates to an apparatus for grading vulnerable articles, such as eggs, said apparatus comprising a weighing station and being characterized in that adjacent the ends of the second conveyor belt that is provided an inserting station for placing the containers successively on a third conveyor belt, along which third conveyor belt there are arranged expelling members for transferring each container successively to a first scale or weighing cell disposed underneath a chute or the like, subsequently to a second scale or cell, and finally to the feed belt.

Some embodiments of the grading apparatus according to the invention will now be described, by way of example, with reference to the accompanying drawings, in which:

Fig. 1 is a top view of an egg grading apparatus, the weighing of the eggs having been effected already;

Fig. 2 is a cross-section on the line II—II of Fig. 1;

Fig. 3 is a diagrammatic front view on the line III—III of Fig. 1;

Fig. 4 is a cross-section on the line IV—IV of Fig. 3;

Figs. 5, 6 and 7 are elevational views to Figs. 1, 3 and 4 of a second embodiment of the egg grading apparatus according to the invention;

Fig. 8 is a longitudinal section of an egg container;

Fig. 9 is a part-sectional elevational view of a container received in a feed belt;

Fig. 10 is a top view of the feed belt according to Fig. 9;

Fig. 11 is a top view of a different embodiment of a buffer belt with a superimposed feed conveyor belt;

Fig. 12 is a side view of the apparatus according to Fig. 11;

Fig. 13 is a top view according to Fig. 11 of another embodiment, and

Fig. 14 is a side view of the apparatus according to Fig. 13.

As shown in the drawing, an apparatus for transporting articles along successive stations and handling the same therein comprises an orienting roller conveyor 1, on which eggs 2 are oriented: the left half of the eggs supplied with the small end to the right and the right half of the eggs supplied with the small end to the left. Apparatus for orientating eggs are known per se from e.g. US patents 2,895,589 and 3,024.889.

From the orienting roller conveyor 1, the eggs are transferred via a chute 1 and rotatable blades 4 to containers 5 received in a feed belt 6.

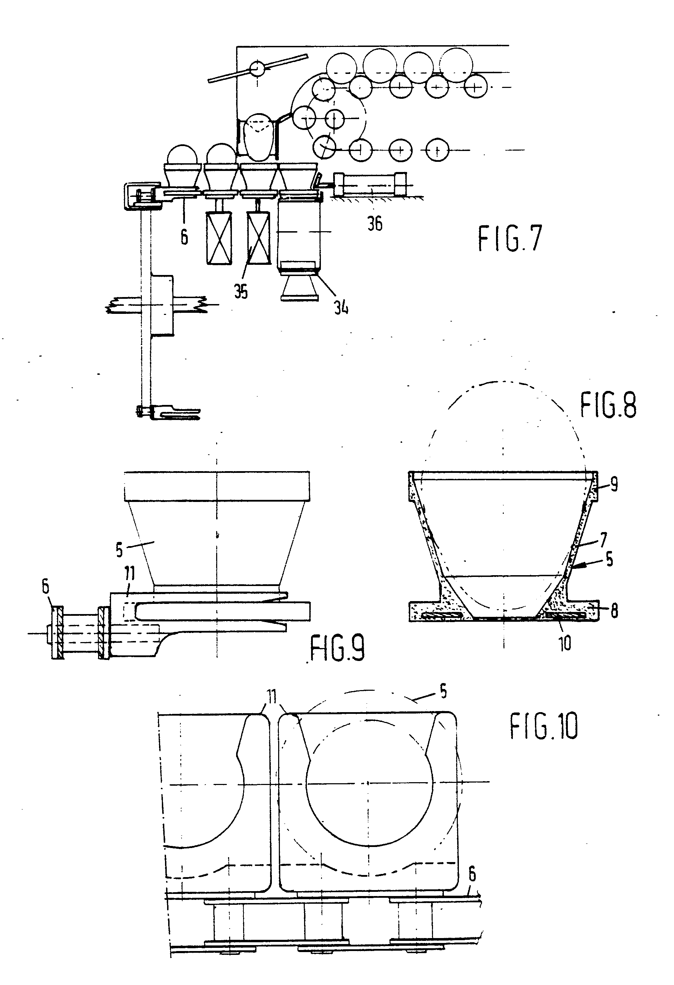

As shown in Fig. 8, each container comprises a double frusto-conical body 7 having a broad foot 8. The frusto-conical body has a maximal diameter defined by a circular-cylindrical ring 9, which is equal to the diameter of the foot 8. In this manner it is achieved that the containers, on displacement over the buffer belt, cannot knock over each other, thus preventing fracture. Besides an annular magnet 10 is received in the foot of the container.

As shown in Figs. 9 and 10, the links of the feed belt 6 are fitted with grippers 11: the grippers 11 are designed in such a manner that they can snappingly engage the containers at the portion just above the foot.

After the filling of all containers present opposite the orienting roller conveyor during standstill of the feed belt, the feed belt is moved a distance corresponding with the number of containers just filled, so that again a corresponding number of empty containers is brought in the filling positions.

The feed belt 6 is driven intermittently via a shaft 12 and a sprocket wheel 13.

As shown in the drawing, a plurality of buffer belts 14, 15 and 16, three in the embodiment shown, are arranged along the feed belt 6.

On arrival of the containers filled with weighed eggs at the buffer belt associated with the egg weight class in question, the respective containers are transferred during the standstill of the feed belt or chain 6 onto the buffer belt 14, 15 or 16 in question by means of an expelling mechanism 17, 18 or 19.

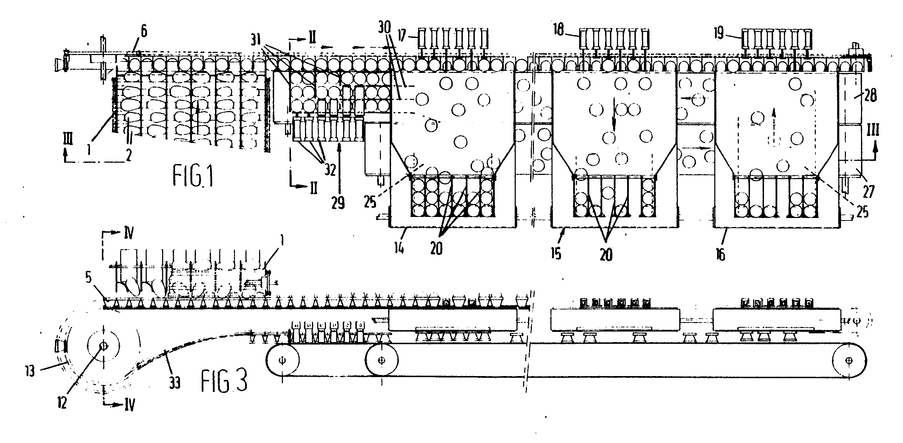

As shown in the drawing, each expelling mechanism 17, 18 or 19 is provided with some (in the present case six) cylinders corresponding with the number of containers per pitch of the intermittently driven feed belt, the free piston rod end of which is adapted to push the containers 5 out of the grippers 11 when the cylinders are operated. Whether a filled container is to be emptied, i.e. the egg received in the container pertains to the respective weight class, is determined by a known per se control means of a microprocessor, not shown, which has received the weighing data immediately after weighing, from the weighing members, not shown in Figs. 1—3.

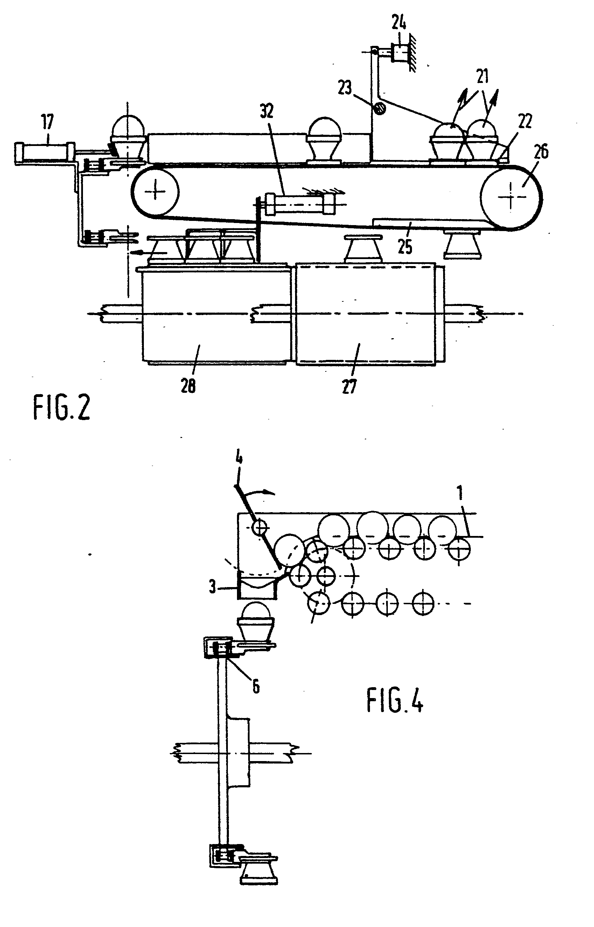

As soon as the filled containers on the buffer belt adjacent the baffles 20 have been brought in the pattern required for further handling, the eggs with suckers, not shown (see e.g. US patent 2,658,789) are taken from the containers and discharged (in Fig. 2 shown by arrows 21). The said pattern is obtained partly in that the baffles are provided at the downstream end with a cam 22 by means of which the filled containers supplied are retained. The passage of the containers takes place in such a manner that the baffles 20 are hinged to a shaft 23, and a projection of the baffle is adapted to be operated by a magnet 24.

As further shown in Fig. 2 and as also shown in Fig. 1 by dashed lines, there is provided above the lower run of the buffer belts a bottom plate 25 of a given length. Both the said bottom plate and the return roller 26 disposed at the respective end of the buffer belt in the embodiment shown are made of soft iron, so that the container adjacent the said return roller and bottom plate continues to "adhere" to the moving buffer belt. At the end of the bottom plate, the containers will be detached from the buffer belt and fall on a conveyor belt 27 disposed at a small distance thereunder, moving in the same direction as the feed belt 6. Beside the conveyor belt 27 there is provided a second conveyor belt 28 extending in a sense opposite to that of the conveyor belt 27. Adjacent the last mentioned buffer belt, seen in the direction of movement of the feed belt 6, the bottom plate 25 extends along a larger distance than is the case with all buffer belts arranged in front thereof along the feed belt. As a result, the said bottom plate together with the associated buffer belt functions as transfer mechanism. For the containers supplied via the conveyor belt 27 will stick to the same buffer belt 16 and, together with the containers already sticking thereto, will be moved in the direction of movement of the buffer belt. Since the bottom plate in question terminates all the second conveyor belt 28, the containers at that location will get detached from the buffer belt and fall on the second conveyor belt 28. The conveyor belt 28 returns the containers 5 naturally still upside down to the "inlet end", where an inserting station 29 is arranged. Said inserting station comprises a plurality of baffles 30 disposed above the conveyor belt 28 and extending in the transport direction, as well as a plurality of baffles 31 arranged upstream thereof, transversely to the transport direction, each of the lastmentioned baffles having a different length. Furthermore, there are provided at the end of the said conveyor belt 28 opposite the feed belt 6, adjacent the baffles 31 arranged transversely to the transport direction, a plurality of inserting members 32, which are basically identical to the expelling mechanisms 17, 18 and 19. The number of inserting members 32 corresponds, in the same manner as the expelling mechanisms 17, 18 and 19, to the number of containers per pitch. The arrangement chosen makes it possible to receive the required number of containers at a large speed in the gripping members 11 of the feed chain 6. Moreover, due to this construction with two conveyor belts, i.e. 27 and 28, all containers essentially traverse the same distance, thus preventing obstruction in the system, which would be the case though when the containers should be returned to the inserting station immediately after discharge of the eggs therefrom.

After insertion of the empty containers in the feed belt, these are again moved by the feed belt along a guide plate 33 and a return gear 13 to underneath the chutes 3, where the filling of the containers is resumed.

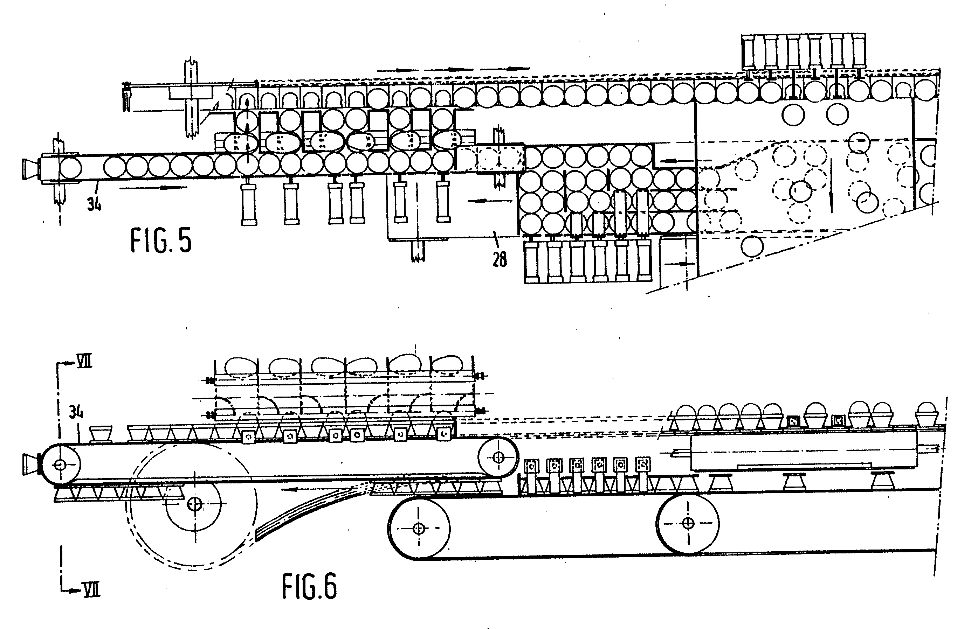

The embodiment described in Figs. 5, 6 and 7 differs from the above described embodiment in that this is provided with a weighing apparatus; the same parts are therefore shown by the same reference numerals.

In this second embodiment, the empty containers supplied by the conveyor belt 28 are not pushed in the feed belt 6, but on a third conveyor belt 34 suitable only for one row of containers. Beside the upper run of the conveyor belt 34, there are arranged a number of scales or weighing cells 35 corresponding to the number of containers per pitch, and which are disposed underneath the chutes 3. As shown in particular in Figs. 6 and 7, the empty containers supplied via the conveyor belt 33 are pushed from the conveyor belt 34 on the scales 35 by means of an expelling mechanism 36, comparable to the expelling mechanism 17, 18 and 19. After weighing the empty containers, an egg supplied via the orienting roller conveyor 1 slides therein. After a following step of the conveyor belt 34 and a subsequent movement of the expelling mechanism 36, the containers meanwhile filled with eggs are shifted and moved on a second scale or cell 37, allowing to accurately determine the weight of the egg in question. In the following step of the conveyor belt 34 and the expelling mechanism 36, the weighed egg-filled container is pressed in the gripper 11 of the conveyor belt 6, after which the egg-filled containers are further handled in the manner as described in the above with reference to Figs. 1—4 and 8—10.

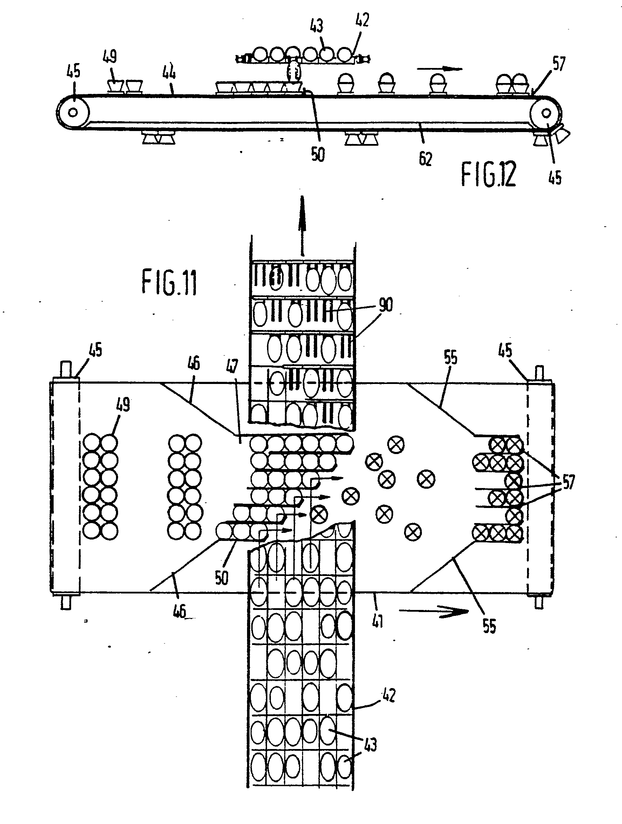

Figs. 11 and 12, relating to a different embodiment of the buffer belt and the feed conveyor belt, show a buffer belt 41 with thereabove a feed conveyor 42, with rotatably arranged fork-shaped containers 90 (details are described and shown in Dutch patent application 8202980 and also US patent application (number unknown)) and with eggs 43 of different dimensions disposed thereon.

The buffer belt comprises a conveyor belt 44 and return rollers 45. Above the buffer belt (Fig. 11) there are arranged at the left of the feed belt 42 guide plates 46 blending with a narrowing 47. Adjacent the narrowing, there are arranged a plurality of guide plates (omitted for the sake of clarity), which are adapted for coaction with egg cups or containers 49 disposed thereon for free movement relative to the buffer belt. The number of tracks formed adjacent the narrowing 47 corresponds with the number of tracks of the egg feed belt 42 (in this case six). Above the buffer belt, there are arranged detainers 50 extending in the tracks formed by the guide plates. The detainers 50 can be operated by magnets, not shown.

Arranged above the discharge end of the buffer belt 41, in succession, are a guide plate 55 and a passage, not shown, fitted with detainers 57. The detainers can be operated in the same manner as the detainers 50 by magnets, not shown.

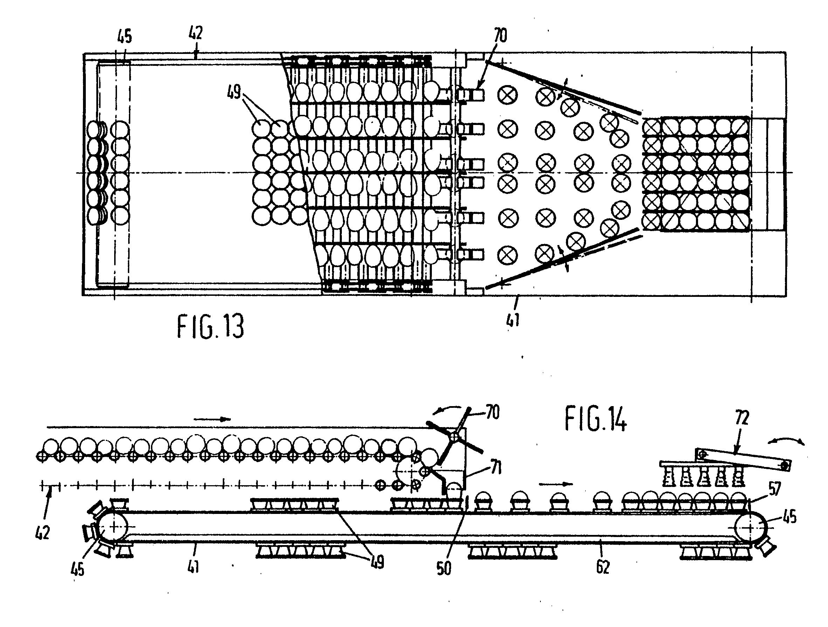

In Figs. 13 and 14, relating again to a different embodiment of a buffer belt with a superimposed feed conveyor belt, the same parts are indicated by the same reference numerals as used in Figs. 11 and 12. The differences reside in that the feed conveyor belt 42 extends and moves in the same direction as the subjacent buffer belt 41, above which there are disposed guide plates, not shown, directed oppositely to the guide plates 46 in Fig. 11. The transfer of the eggs to the cups 49 takes place by means of rotatable blades (turnstile) 70 and a subjacent chute 71, according to the embodiment shown in Fig. 4. A third and last difference consists in that the sidewalls 55 of the buffer belt are movable; for details thereof, reference is made to applicants' US patent 4,086,998. For the sake of completion and clarity, there is diagrammatically shown exclusively in Fig. 14, above the discharge end of the buffer belt, a transfer apparatus 72 fitted with bellows.

As already oserved, the apparatuses described have the advantage that the risk of fracture is minimized; nevertheless, temporary storage of the eggs in their containers is possible. Another advantage is that due to the uniformness of the containers, their handling together with the eggs received therein is simple.

## Claims

1. A method of transporting products along and between successive stations and handling the same therein, e.g. arranging, candling, weighing, encoding, grading and the like of vulnerable products, such as eggs, wherein each product at least during a part of the handling cycle, is separately received in a container and each product is removed therefrom after the said part of the cycle, characterized in that each container is independently movable with respect to other containers or each container is independently movable with respect to other containers in at least one direction.

2. A method according to claim 1, characterized in that at the weighing station, each container supplied is first weighed in empty condition and after the reception of a product therein, together therewith, thus determining the weight and the weight class of the article.

3. An apparatus for transporting products along and between successive stations and handling the same therein, e.g. arranging, candling, weighing, encoding, grading and the like of vulnerable products, such as eggs, comprising:
— means for transferring each product separately to a container (5; 49) at least a part of the handling cycle;
— at least one conveyor member (41) for conveying the product placed in its container during this part of the handling cycle; and
— means for removing each product from its container after the said part of the handling cycle, characterized in that no means on the conveyor means prevent each container (5; 49) conveyed by the conveyor means from moving independently with respect to other containers (5; 49) or from moving independently with respect to other containers (5; 49) in at least one direction.

4. An apparatus according to claim 3, comprising a feed belt (6), as well as a plurality of buffer belts (14, 15, 16) arranged therealong, characterized in that the feed belt (6) is provided with gripping or carrying members (11) for receiving the containers, while along the feed belt, at each of the buffer belts, there are arranged one or more expelling or releasing mechanisms (17, 18, 19) for expelling the containers (5) from the gripping or carrying members.

5. An apparatus according to claim 4, characterized in that directly above the lower run of the buffer belt (14, 15, 16) there is arranged a bottom plate (25) extending in the direction of movement of said lower run of the buffer belt from a point where the buffer belt leaves the return roller at the discharge end of the buffer belt, which bottom plate is magnetic, as is said return roller (26) of said buffer belt disposed at the discharge end, each container being provided with a part made of soft iron or a different magnetizable material.

6. An apparatus according to claim 4 or 5, characterized in that a conveyor belt (27) extends underneath the buffer belts (14, 15, 16) in the same direction as the feed belt, and the said bottom plates (25) terminate at the conveyor belt.

7. An apparatus according to claim 6, characterized in that a second conveyor belt (28) extends underneath the buffer belts in a direction opposite to that of the first conveyor belt (27), a transfer apparatus being provided adjacent the last mentioned conveyor belt (27) above the said conveyor belts, which transfer apparatus is formed by the bottom plates (25), while an inserting station (29) is provided adjacent the end of the second conveyor belt for inserting the empty containers in the feed belt (6).

8. An apparatus according to claim 7, characterized in that the inserting station comprises a plurality of baffles (30) arranged in longitudinal direction above the conveyor belt and a plurality of baffles (31) arranged downstream thereof, transversely to the transport direction above the conveyor belt, each having a different length, while furthermore a plurality of inserting members (32) are arranged at the end of the said conveyor belt (28) opposite the feed belt (6), adjacent the baffles (31) arranged transversely to the transport direction.

9. An apparatus according to one or more of claims 4—8, characterized in that a chute (3; 71) and rotatable blades (4; 70) disposed thereabove is provided at the transfer location for transferring eggs from an orienting roller conveyor (1; 42) in the containers (5; 49).

10. An apparatus according to one or more of the claims 3—9, in which a plurality of guide plates are arranged above the discharge end of each buffer belt, characterized in that the guide plates are mounted on a hinged bracket, and are provided at the downstream end with blocking members for the containers and are tiltable by means of a magnet or the like so as to allow the passage of the containers.

11. An apparatus according to one or more of claims 7—9, and adapted for performing the method according to claim 2, characterized in that an inserting station is provided at the end of the second conveyor belt (28) for placing the containers successively on a third conveyor belt (34), along which third conveyor there are arranged expelling members (36) for transferring each container successively to a first scale or weighing cell (35) disposed underneath a chute (3) or the like, subsequently to a second scale or cell (37), and finally to the feed belt (6).

12. A container for use in the apparatus according to one or more of the claims 5 and 6—11, when dependent to at least claim 5, characterized in that the container (5) is open at the top, narrowing towards the bottom, e.g. according to one or more truncated cones (7), and further comprising a foot (8) extending perpendicularly to the container axis, the outer circumference of said foot being at least equal to the outer circumference of the upper edge of the container and in which said foot contains a magnetic or magnetizable ring (10).

**Patentansprüche**

1. Verfahren zum Transport von Gütern entlang aufeinanderfolgender Stationen und zum Behandeln der Güter in den Stationen, z.B. Ordnen, Durchleuchten, Wiegen, Chiffreiren, Klassifizieren u.dgl. von empfindlichen Gütern, wie Eier, wobei jedes Gutstück zumindest während eines Teils des Behandlungszyklus einzeln von einem Behälter aufgenommen wird, und diesen nach dem Zyklus wieder verläßt, dadurch gekennzeichnet, daß jeder Behälter unabhängig von anderen Behältern bewegbar ist oder jeder Behälter unabhängig von anderen Behältern in zumindest einer Richtung bewegbar ist.

2. Verfahren nach Anspruch 1, dadurch gekennzeichnet, daß jeder Behälter an der Wiegestation zunächst in leerem Zustand gewogen und nach Aufnahme eines Gutstücks mit diesem zusammen gewogen wird, so daß das Gewicht und die Gewichtsklasse des Gutstücks bestimmt wird.

3. Vorrichtung zum Transport von Gütern entlang aufeinanderfolgender Stationen und zum Behandeln der Güter in den Stationen, z.B. Ordnen, Durchleuchten, Wiegen, Chiffrieren, Klassifizieren, u.dgl. von empfindlichen Gütern, wie Eier, bestehend aus

— Mitteln zum getrennten Transport der einzelnen Gutstücke zu jeweils einem Behälter (5; 49) zumindest während eines Teils des Behandlungszyklus;

— mindestens einem Förderer (41) zur Weiterleitung des Gutstücks im Behälter während dieses Teils des Behandlungszyklus; und

— Mitteln zur Entnahme der einzelnen Gutstücke aus dem jeweiligen Behälter nach Beendigung dieses Teils des Behandlungszyklus, gekennzeichnet durch eine unabhängige Bewegungsmöglichkeit jedes Behälters (5; 49) auf dem Förderer relativ zu anderen Behältern (5; 49) oder relativ zu anderen Behältern (5; 49) in mindestens einer Richtung.

4. Vorrichtung nach Anspruch 3, bestehend aus einem Beschickungsband (6) mit mehreren Pufferbändern (14, 15, 16) entlang dem Beschickungsband (6), dadurch gekennzeichnet, daß das Beschickungsband (6) Greif- oder Tragvorrichtungen (11) zur Aufnahme der Behälter besitzt, während entlang dem Beschickungsband bei jedem Pufferband ein oder mehrere Ausstoß- oder Freigabemechanismen (17, 18, 19) zum Entfernen der Behälter (5) aus den Greif- oder Tragvorrichtungen vorgesehen sind.

5. Vorrichtung nach Anspruch 4, dadurch gekennzeichnet, daß direkt über dem Untertrum des Pufferbandes (14, 15, 16) eine Bodenplatte (25) vorgesehen ist, die sich in Bewegungsrichtung des Untertrums des Pufferbandes von dem Punkt aus erstreckt, an dem das Pufferband die Umlenkrolle am Abgabeende des Pufferbandes verläßt, und daß die Bodenplatte ebenso wie die Umlenkrolle (26) des Pufferbandes, die sich an deren Abgabeende befindet, magnetisch ist, und daß jeder Behälter mit einem Weicheisenteil oder einem Teil aus anderem magnetisierbaren Material versehen ist.

6. Vorrichtung nach Anspruch 4 oder 5, dadurch gekennzeichnet, daß sich unter den Pufferbändern (14, 15, 16) ein Förderband (27) in derselben Richtung wie das Beschickungsband erstreckt, und daß die Bodenplatten (25) am Förderband enden.

7. Vorrichtung nach Anspruch 6, dadurch gekennzeichnet, daß sich unterhalb der Pufferbänder ein zweites Förderband (28) entgegengesetzt zur Richtung des ersten Förderbands (27) erstreckt, daß nahe dem und über dem letztgenannten Förderband (27) eine Übergabevorrichtung vorgesehen ist, die durch eine Bodenplatte (25) gebildet wird, die relativ zu den anderen Bodenplatten (25) verlängert ist, und daß nahe dem Ende des zweiten Förderbandes eine Zwischenstation (29) vorgesehen ist, um die Leeren Behälter auf das Beschickungsband (6) zu geben.

8. Vorrichtung nach Anspruch 7, dadurch gekennzeichnet, daß die Zwischen- bzw. Einfügestation mehrere Sperren (30) besitzt, die in Längsrichtung über dem Förderband angeordnet sind, sowie mehrere Sperren (31), die in Förderrichtung dahinter und senkrecht zur Förderrichtung über dem Förderband angeordnet sind und jeweils unterschiedliche Länge haben, während außerdem mehrere Einschub- bzw. Einfügeglieder (32) am Ende des Förderbandes (28) gegenüber dem Beschickungsband (6) nahe den Sperren (31) senkrecht zur Transportrichtung angeordnet sind.

9. Vorrichtung nach einem oder mehreren der Ansprüche 4 bis 8, gekennzeichnet durch eine Rutsche (3; 71) und rotierbare Schaufelblätter (4; 70) über der Rutsche an der Übergabestelle zum Übergeben von z.B. Eiern von einem ausrichtenden Rollenförderer (1; 42) in die Behälter (5; 49).

10. Vorrichtung nach einem oder mehreren der Ansprüche 3 bis 9, mit mehreren Führungsplatten über dem Abgabeende jedes Pufferbandes, dadurch gekennzeichnet, daß die Führungsplatten an einem Scharnierträger befestigt, an ihrem in Transportrichtung stromabwärts gelegenen Ende mit Sperrgliedern für die Behälter versehen und durch einen Magnet od.dgl. kippbar sind, um den Durchgang der Behälter zu erlauben.

11. Vorrichtung nach einem oder mehreren der Ansprüche 7 bis 9 zur Durchführung des Ver-

## 0 115 363

fahrens nach Anspruch 2, dadurch gekennzeichnet, daß eine Zwischen- bzw. Einfügestation am Ende des zweiten Förderbandes (28) vorgesehen ist, um die Behälter nacheinander auf ein drittes Förderband (34) zu geben, entlang dessen (34) Ausstoßglieder (36) vorgesehen sind, zur Aufeinanderfolgenden Übergabe jedes Behälters an eine erste Waagschale oder Wiegezelle (35), die unterhalb einer Rutsche (3) od.dgl. angebracht ist, anschließend an eine zweite Waagschale oder Wiegzelle (37) und schließlich an das Beschickungsband (6).

12. Behälter zum Gebrauch in der Vorrichtung gemäß einem oder mehreren der Ansprüche 5 bis 11, dadurch gekennzeichnet, daß der Behälter (5) oben offen ist und zu seinem Boden hin enger wird, z.B. gemäß einem oder mehreren Kegelstümpfen (7), daß der Behälter einen sich senkrecht zur Behälterachse erstreckenden Fuß (8) besitzt, dessen Außenumfang mindestens gleichgroß wie der Außenumfang des oberen Randes des Behälters ist, und daß der Fuß einen Magnetischen oder magnetisierbaren Ring (10) aufweist.

## Revendications

1. Une méthode de transport de produits le long et entre des stations successives et leur manutention là dedans, par exemple l'arrangement, le mirage, le pesage, le codage, le classement etcetera de produits vulnérables, comme de oeufs, dans laquelle chaque produit, au moins pendant une partie du cycle de manutention, est reçu séparément dans un récipient et chaque produit est enlevé dudit récipient après ladite partie du cycle, caractérisée en ce que chaque récipient est mobile séparément par rapport à d'autres récipients ou chaque récipient est mobile séparément par rapport à d'autres récipients dans au moins une direction.

2. Une méthode selon la revendication 1, caractérisée en ce que dans la station de pesage, chaque récipient fourni est d'abord pesé en état vide et après la réception d'un produit là-dedans, en même temps avec ledit produit, pour ainsi déterminer le poids et la catégorie de poids de l'article.

3. Un appareil de transport de produits le long et entre des stations successives, et leur manutention là-dedans, par exemple l'arrangement, le mirage, le pesage, le codage, le classement etcetera de produits vulnérables, comme des oeufs, comprenant:

— des moyens pour transporter chaque produit séparément vers un récipient (5; 49) au moins pendant une partie du cycle de manutention;

— au moins un organe de transport (41) pour transporter le produit placé dans son récipient pendant cette partie du cycle de manutention; et

— des moyens pour enlever chaque produit de son récipient après ladite partie du cycle de manutention,

caractérisée en ce qu'il n'y a pas de moyens sur les organes de transport qui empêchent chaque récipient (5; 49) transporté par les organes de transport de se déplacer séparément par rapport à d'autres récipients (5; 49) ou de se déplacer séparément par rapport à d'autres récipients (5; 49) dans au moins une direction.

4. Un appareil selon la revendication 3, comprenant une courroie d'alimentation (6) et une pluralité de courroies-tampons (14, 15, 16) le long de la courroie (6), caractérisé en ce que la courroie d'alimentation (6) est munie d'organes d'accrochage ou d'organes porteurs (11) pour recevoir les récipients, alors que le long de la courroie d'alimentation, près de chacune des courroies-tampons, on a prévu un ou plusieurs mecanismes d'expulsion ou de dégagement (17, 18, 19) pour expulser les récipients (5) des organes d'accrochage ou des organes porteurs.

5. Un appareil selon la revendication 4, caractérisé en ce que directement au-dessus de la partie inférieure de la courroie-tampon (14, 15, 16), on a prévu une plaque de fond (25) s'étendant dans la direction de mouvement de ladite partie inférieure de la courroie-tampon à partir d'un point où la courroie-tampon quitte le rouleau de renvoi au bout de décharge de la courroie-tampon, ladite plaque de fond étant magnétique comme ledit rouleau de renvoi (26) de ladite courroie-tampon prévu au bout de décharge, chaque récipient étant muni d'une partie fabriquée en fer doux ou en un autre matériau magnétisable.

6. Un appareil selon la revendication 4 ou 5, caractérisé en ce qu'une courroie transporteuse (27) s'étend au-dessous des courroies-tampons (14, 15, 16) dans la même direction que la courroie d'alimentation, et que les plaques de fond (25) se terminent près de la courroie transporteuse.

7. Un appareil selon la revendication 6, caractérisé en ce qu'une seconde courroie transporteuse (28) s'étend au-dessous des courroies-tampons dans une direction opposée à celle de la première courroie transporteuse (27), un appareil de transport étant prévu près de la dernière courroie transporteuse (27) au-dessus desdites courroies transporteuses, ledit appareil de transport étant formé par une plaque de fond (25) qui est allongée par rapport aux autres plaques de fond (25), lors qu'une station d'insertion (29) est prévue près du bout de la seconde courroie transporteuses pour introduire les récipients vides dans la courroie d'alimentation (6).

8. Un appareil selon la revendication 7, caractérisé en ce que la station d'insertion comprend une pluralité de chicanes (30) arrangées en direction longitudinale au-dessus de la courroie transporteuse et une pluralité de chicanes 31 arrangées en aval, transversalement à la direction de transport au-dessus de la courroie transporteuse, chacune ayant une longueur différente, alors qu'on a arrangé de plus une pluralité d'organes d'insertion (32) au bout de ladite courroie transporteuse (28) opposées à la courroie d'alimentation (6), près des chicanes (31) arrangées transversalement à la direction de transport.

9. Un appareil selon l'une quelconque des revendications 4—8, caractérisé en ce qu'on a prévu en entonnoir (3; 71) et des ailes rotatives (4; 70) arrangées là-dessus à l'endroit de transport pour transporter des oeufs à partir d'un transporteur à rouleaux d'orientation (1; 42) dans les récipients (5; 49).

10. Un appareil selon l'une quelconque des revendications 3—9, dans lequel une pluralité de plaques de guidage sont arrangées au-dessus du bout de décharge de chaque courroie-tampon, caractérisé en ce que les plaques de guidage sont montées sur une applique à charnière, et sont munies au bout en aval d'organes bloqueurs pour les récipients et sont inclinables à l'aide d'un aimant ou pareil pour ainsi permettre le passage des récipients.

11. Un appareil selon l'une quelconques des revendications 7—9, et ménagé à exécuter la mèthode selon la revendication 2, caractérisé en ce qu'on a prévu une station d'insertion au bout de la seconde courroie transporteuse (28) pour placer les récipients successivement sur une troisième courroie transporteuse (34), le long de ladite troisième transporteur on a prévu des organes d'expulsion (36) pour transporteur chaque récipient successivement vers une première balance ou élément de pesage (35) ménagé audessous d'un entonnoir (3) ou pareil, ensuite vers une seconde balance ou élément de pesage (37) et finalement vers la courroie d'alimentation (6).

12. Un récipient pour usage dans l'appareil selon l'une quelconque des revendications 5 et 6—11 quand dépendant au moins de la revendication 5, caractérisé en ce que le récipient (5) est ouvert au sommet, se rétrécissant vers le fond, par exemple selon un ou plusieurs cônes tronqués (7), et comprenant en plus un pied (8) s'étendant perpendiculairement à l'axe du récipient, la circonférence extérieure dudit pied étant au moins égale à la circonférence extérieure du bord supérieure du récipient, et dans lequel ledit pied contient un anneau magnétique ou magnétisable (10).

FIG.1

FIG.3

0 115 363

FIG.2

FIG.4

FIG.5

FIG.6

FIG.7

6

35

34

36

FIG.8

9

7

5

8

10

5

FIG.9

6

11

FIG.10

11

5

6

0 115 363

FIG.12

FIG.11

FIG.13

FIG.14

0 115 363